# EUROPÄISCHE PATENTSCHRIFT

(11) **EP 3 189 920 B1**
(45) Veröffentlichungstag und Bekanntmachung des Hinweises auf die Patenterteilung: **24.03.2021**
(21) Anmeldenummer: 17150898.9
(22) Anmeldetag: 10.01.2017
(51) Int. Cl.: B23H 7/26, B23Q 3/18, B25B 1/24

(54) **FIXIERVORRICHTUNG, DRAHTERODIERMASCHINE ODER LASERANLAGE UND VERFAHREN ZUM DRAHTERODIEREN BZW. LASERN**
FIXING DEVICE, WIRE CUTTING MACHINE OR LASER ASSEMBLY AND METHOD FOR WIRE CUTTING OR LASERING
DISPOSITIF DE FIXATION, MACHINE D'USINAGE PAR ÉLECTRO-ÉROSION OU INSTALLATION LASER ET PROCÉDÉ D'USINAGE PAR ÉLECTRO-ÉROSION OU PAR LASER

(30) Priorität: 11.01.2016 DE 102016100374
(43) Veröffentlichungstag der Anmeldung: 12.07.2017
(73) Patentinhaber: Retero GmbH, 8245 Feuerthalen (CH)
(72) Erfinder: RETTER, Helmut, 8253 Diessenhofen (CH); SAADELLAOUI, Abdelmajid, 8207 Schaffhausen (CH)
(74) Vertreter: Schulz Junghans Patentanwälte PartGmbB

(56) Entgegenhaltungen:
- CN-A- 103 639 771
- CN-U- 201 702 591
- DE-C1- 3 919 078

## Beschreibung

Die vorliegende Erfindung betrifft eine Fixiervorrichtung zur Fixierung von Werkstücken, insbesondere zur Fixierung von im Wesentlichen stangenförmigen und mittels Drahterodieren oder Lasern zu bearbeitenden Werkstücken. Des Weiteren betrifft die Erfindung eine Drahterodiermaschine oder eine Laseranlage, die eine erfindungsgemäße Fixiervorrichtung aufweist. Ergänzt wird die vorliegende Erfindung durch ein Verfahren zum Drahterodieren oder Lasern einer Mehrzahl von Werkstücken.

Es sind unterschiedliche Verfahren zur Formgebung bzw. trennenden Bearbeitung von Werkstücken im Miniaturformat bekannt, wobei diese Verfahren üblicherweise derart auszuführen sind, dass kleinste Formelemente mit einer sehr hohen Genauigkeit hinsichtlich ihrer Abmessungen und Toleranzen sowie Positionen zu fertigen sind. Eines dieser Verfahren ist das Drahterodieren bzw. Elektroerodieren. Dies ist ein formgebendes Fertigungsverfahren, mit welchem elektrisch leitende Materialien mit hoher Präzision nach dem Prinzip des Funkenerodierens bearbeitet werden können. Dabei erfolgt eine Folge von elektrischen Spannungspulsen, die Funken erzeugen, die wiederum Material vom Werkstück, welches als Anode ausgebildet ist, auf einen durchlaufenden dünnen Draht, welcher hier als Katode ausgebildet ist, sowie in ein trennendes Medium, welches hier durch ein Dielektrikum ausgebildet ist, übertragen. Die hohe Präzision wird dadurch erreicht, dass der Material abtragende Funke stets an der Stelle des geringsten Abstandes zwischen dem Werkstück und dem Draht überspringt.

Verstärkt wird jedoch auch die Bearbeitung von Präzisionsteilen mittels Laser durchgeführt.

Um die durch das Drahterodieren bzw. Lasern mögliche präzise Formgebung und die geforderte Maßhaltigkeit zu gewährleisten, sind die zur bearbeitenden Werkstücke in ihren jeweiligen Bearbeitungspositionen sicher zu fixieren.

Zu diesem Zweck sind unterschiedliche Vorrichtungen bekannt.

Aus der DE 79 10 696 U ist ein Spannblock bekannt, der einen quaderförmigen Hauptkörper sowie an gegenüberliegenden Seiten parallel angeordnete Auflageprismen aufweist. Diese Auflageprismen dienen zur Aufnahme von Werkstücken. Des Weiteren umfasst der Spannblock einen oder mehrere Spannbügel, durch welche Spannschrauben geführt sind, um die in den Auflageprismen aufgenommenen Werkstücke zu fixieren.

Aus der DE 11 2011 101 672 T5 ist ein Werkstückhalter sowie eine Drahtelektroerodiervorrichtung bekannt, die in einer Ausführungsform vorsieht, mehrere Werkstücke gleichzeitig in einer blockartigen Aufnahme zu positionieren und zu fixieren. Die Fixierung der Werkstücke wird dabei durch jeweilige, den einzelnen Werkstücken zugeordnete Spanneinrichtungen realisiert. Aufgrund der gleichzeitigen Aufnahme und Fixierung mehrerer Werkstücke lassen sich demzufolge auch mehrere Werkstücke gleichzeitig mittels Drahtelektroerodierung bearbeiten.

Die DE 3 618 521 C1 lehrt eine Vorrichtung zum Einspannen von nicht umlaufenden Werkstücken, die zumindest abschnittsweise einen polygonalen Querschnitt besitzen. Die Vorrichtung umfasst einen Spannkörper mit einer Spannklammer zur Aufnahme des polygonalen Abschnittes und ein Spannmittel in Form einer Madenschraube zur Fixierung des Werkstücks. Das Spannmittel kann außerdem ergänzt werden durch Federelemente, die ebenfalls Druckkräfte auf das zu spannende Werkstück ausüben.

Die EP 1 262 266 B1 lehrt eine Spannvorrichtung zur Aufnahme und zur drehfesten Fixierung von Gewindeschäften, insbesondere zwecks Elektroerodierung des jeweiligen Gewindes. Das Werkstück ist dabei an seinem Umfang durch eine Spannvorrichtung fixiert.

Aus der DE 1973 90 59 A1 ist eine Halteplatte für ein Werkstück bekannt, die es ermöglicht, durch Positionierung und Fixierung der Halteplatte in einem relativ großen Abstand von einem Arbeitstisch ein Werkstück in einem Arbeitsbereich einer Maschine, insbesondere einer Elektroerodiermaschine, zu positionieren und zu fixieren. Damit ist eine wiederholbare exakte Positionierung des Werkstücks im Arbeitsbereich gewährleistet.

Nachteilig an den bekannten Vorrichtungen zur Fixierung der Werkstücke im Drahterosionsverfahren ist, dass diese üblicherweise keine Bearbeitung von Kleinst-Bauteilen aufgrund der relativ hohen Vorrichtungs-Toleranzen ermöglichen. So sind z.B. mit den bekannten Vorrichtungen keine Mikro-Operations-Instrumente mit einer derart hohen Genauigkeit positionierbar, dass diese Instrumente mit der geforderten Genauigkeit bzw. den geforderten Toleranzen gefertigt werden können.

Zudem sind die bekannten Vorrichtungen hinsichtlich der Flexibilität bzgl. der Aufnahme unterschiedlicher Werkstücke eingeschränkt. Weiterhin besteht jeweils ein relativ hoher Aufwand bei der Fixierung der Werkstücke bzw. bei der Zuführung der fixierten Werkstücke zum Bearbeitungsprozess. Zudem sind bei den bekannten Vorrichtungen Beschädigungen der Werkstücke durch nur relativ grob einstellbare Fixierungskräfte nicht ausgeschlossen.

Der vorliegenden Erfindung liegt daher die Aufgabe zu Grunde, eine Fixiervorrichtung sowie eine Drahterodiermaschine bzw. eine Laseranlage und ein Verfahren zum Drahterodieren bzw. Lasern zur Verfügung zu stellen, mit denen ein wirtschaftliches Spannen bzw. Fixieren mehrerer Werkstücke zwecks Drahterodieren oder Lasern dieser Werkstücke in Serienfertigung unter hoher Positionsgenauigkeit der Werkstücke möglich ist.

Diese Aufgabe wird durch die erfindungsgemäße Fixiervorrichtung nach Anspruch 1, durch die erfindungsgemäße Drahterodiermaschine oder Laseranlage nach Anspruch 5 und durch das erfindungsgemäße Verfahren zum Drahterodieren bzw. Lasern einer Mehrzahl von Werkstücken nach Anspruch 6 gelöst. Vorteilhafte Ausgestaltungen der erfindungsgemäßen Fixiervorrichtung sind in den Unteransprüchen 2 bis 4 angegeben.

Die erfindungsgemäße Fixiervorrichtung dient zur Fixierung von Werkstücken, insbesondere zu Fixierung von im Wesentlichen stangenförmigen und mittels Drahterodieren oder Lasern zu behandelnden Werkstücken. Die Fixiervorrichtung umfasst eine Stützeinrichtung mit mehreren Formelementen zur Aufnahme und Stützung mehrerer Werkstücke in den entsprechend ausgebildeten Formelementen, und zur Positionierung und Fixierung der Werkstücke in zumindest einem translatorischen Freiheitsgrad in den Formelementen. Weiterhin weist die erfindungsgemäße Fixiervorrichtung eine Spanneinrichtung auf, mit der mehrere in den Formelementen aufgenommene Werkstücke jeweils mit Druckkraft beaufschlagbar sind, sodass die Werkstücke aufgrund der Druckkraft-Beaufschlagung zumindest kraftschlüssig in der Spanneinrichtung fixiert sind. Zu diesem Zweck umfasst die Stützeinrichtung als Formelemente mehrere Durchgangsöffnungen, durch die die Werkstücke hindurch führbar sind, , wodurch die Werkstücke in ihren translatorischen Freiheitsgraden, die senkreicht zu den Längserstreckungsrichtungen der Werkstücke bzw. auch zu den Längserstreckungsrichtungen der Formelemente ausgerichtet sind, blockiert sind.

Die Spanneinrichtung weist ein Druckelement und ein Gegendruckelement auf, zwischen denen die Werkstücke einklemmbar sind. Die Klemmung wird durch eine vom Druckelement in Richtung auf das Gegendruckelement realisierte Druckkraft realisiert. Wenigstens eines der Elemente Druckelement und Gegendruckelement, vorzugsweise das Gegendruckelement, weist mehrere im Wesentlichen parallel zueinander verlaufende Aufnahmeeinrichtungen auf, die der Abstützung der Werkstücke sowie deren Fixierung in im Wesentlichen paralleler Ausrichtung dienen.

Vorzugsweise sollten dabei die Werkstücke genau parallel ausrichtbar sein. Dabei ist eine Toleranz von ±0,01 mm akzeptabel.

Die Aufnahme und Stützung mehrerer Werkstücke in den Formelementen der Stützeinrichtung erfolgt dabei derart, dass die Werkstücke in den Formelementen aufgenommen sind. Durch geringe Toleranzen zwischen den Formelementen der Stützeinrichtung und den Werkstücken ergibt sich hier eine Fixierung der Werkstücke senkrecht zu deren Längserstreckungsrichtungen. Dadurch ist wenigstens ein translatorischer Freiheitsgrad, der senkrecht zur Längserstreckung der Werkstücke verläuft, blockiert. Vorzugsweise sind beide senkrecht zur Längserstreckung des jeweiligen Werkstückes verlaufenden translatorischen Freiheitsgrade blockiert. Die Spanneinrichtung sorgt zusammen mit den Formelementen der Stützeinrichtung für die Fixierung des Werkstücks in allen Freiheitsgraden, nämlich durch die Erzeugung von Reibkräften zwischen den Werkstücken und der Spanneinrichtung, die durch von der Spanneinrichtung auf die Werkstücke aufgetragenen Druckkräfte erzeugt werden. Das heißt, dass vorzugsweise lediglich eine Stützeinrichtung sowie eine Spanneinrichtung nötig sind, um mehrere Werkstücke im Wesentlichen gleichzeitig durch Aufbringung einer jeweiligen Druckkraft zu fixieren, sodass diese Werkstücke im fixierten Zustand bearbeitbar sind. Dadurch fällt der Aufwand der seriellen Spannung bzw. Fixierung mehrerer Werkstücke weg, der üblicherweise bei den bisher bekannten Vorrichtungen anfällt. Stattdessen ist eine gleichzeitige Spannung und Fixierung der Werkstücke vorgesehen, sodass diese Werkstücke nur noch durch Bewegung der Fixiervorrichtung dem jeweiligen Bearbeitungsprozess zugeführt werden müssen. Das bedeutet, dass zur Zuführung eines jeweiligen gespannten und damit fixierten Werkstückes zum Bearbeitungsprozess lediglich eine Positionierbewegung der Fixiervorrichtung sowie eine Fixierung der Fixiervorrichtung in der beabsichtigten Position notwendig ist, um das jeweilige Werkstück an dem Bearbeitungsort, an dem das Drahterodieren bzw. Lasern stattfindet, zu positionieren und zu fixieren.

Die dafür benötigte Vorschub-Bewegung der Fixiervorrichtung kann über eine von der Fixiervorrichtung umfasste Führungseinrichtung, insbesondere eine Lineareinrichtung, realisiert werden. Die erfindungsgemäße Fixiervorrichtung ist insbesondere zu Fixierung bzw. Positionierung von rotationssymmetrischen Werkstücken mit einem Durchmesser von 0,2 bis 0,4 mm geeignet. Derartige Werkstücke können z.B. Rohlinge zur Herstellung von Mikro-Operations-Instrumenten sein, wie sie im Bereich der Ophthalmologie Anwendung finden. Die durch Einsatz der erfindungsgemäßen Fixiervorrichtung realisierbaren Toleranzen betragen 0 bis 0,1 mm in den herzustellenden Formelementen an den Werkstücken.

Vorzugsweise ist die erfindungsgemäße Fixiervorrichtung modular aufgebaut, sodass Stützeinrichtungen sowie auch Spanneinrichtungen jeweils durch ein Modul ausgebildet sind, die in relativ einfacher Weise ausgetauscht werden können. Dadurch verringert sich der Wartungsaufwand an der erfindungsgemäßen Fixiervorrichtung. Durch die exakte Positionierung und Fixierung der Werkstücke in der Fixiervorrichtung wird zudem eine Qualitätskontrolle an den bearbeiteten Werkstücken, die in der Fixiervorrichtung aufgenommen sind, erleichtert.

Die Stützeinrichtung umfasst als Formelemente mehrere Durchgangsöffnungen, durch die die Werkstücke hindurchführbar sind, wobei die Werkstücke danach mittels der Spanneinrichtung fixierbar sind. Diese Durchgangsöffnungen können insbesondere Durchgangsbohrungen sein, an denen sich ggf. radial Schlitze anschließen. Diese Schlitze dienen jedoch nicht zur Aufnahme oder Hindurchführung von Werkstücken, sondern sind lediglich fertigungstechnisch bei der Herstellung der Durchgangsöffnungen mittels Drahterodieren bedingt.

Dabei sollten die Formelemente in Bezug zu den Werkstück-Abschnitten, die von den Formelementen aufzunehmen sind, eine maßliche Toleranz von ±0,0015 mm nicht überschreiten.

Die Formelemente zueinander sollten in ihrer Parallelität eine Toleranz von ±0,0015 mm nicht überschreiten. Auch Bohrungen zur Befestigung bzw. Positionierung der Stützeinrichtung an einer Grundplatte sollten zueinander eine Abstandstoleranz von ±0,005 mm nicht überschreiten.

Die auch als Kopfplatte bezeichnete Stützeinrichtung kann aus einem rostfreien Material hergestellt und gegebenenfalls gehärtet sein, wobei zur Herstellung dieser Stützeinrichtung ebenfalls ein Drahterosionsverfahren genutzt werden kann.

In einer Ausgestaltung der erfindungsgemäßen Fixiervorrichtung weist die Stützeinrichtung an die Formelemente entlang deren Längserstreckungsrichtung sich anschließend jeweils Aufweitungsbereiche auf, wobei ein jeweiliger Aufweitungsbereich derart ausgestaltet ist, dass in ihm ein endseitiger Abschnitt eines in oder an dem Formelement geführten Werkstückes in einem translatorischen Freiheitsgrad senkrecht zur Längserstreckungsrichtung des Formelements fixierbar ist. Das heißt, dass dieser Aufweitungsbereich eine Weite haben sollte, die mindesten doppelt so groß ist wie die Weite des dazugehörigen Formelementes. Dieser Aufweitungsbereich kann z.B. im Wesentlichen die Form eines V-Profils haben, dessen tiefster Punkt bzw. Scheitelpunkt oder auch Scheitelbereich an das Formelement anschließt. Der Aufweitungsbereich dient zur Zentrierung eines aus der Stützeinrichtung bzw. dem jeweiligen Formelement ragenden endseitigen Abschnittes, der eine größere Erstreckung senkrecht zur Längserstreckungsrichtung des Werkstücks aufweist als der Bereich des Werkstückes, der in dem jeweiligen Formelement positioniert ist. Durch den jeweiligen Aufweitungsbereich wird eine Fixierung des in diesem Bereich vorhandenen Abschnittes des Werkstückes senkrecht zur Längserstreckungsrichtung des Werkstückes gewährleistet, obwohl dieser Bereich des Werkstückes im Aufweitungsbereich eine größere Dicke bzw. Weite aufweist als das restliche Werkstück.

Auch das als Prismenplatte bezeichnete Gegendruckelement kann aus einem rostfreien Material hergestellt und gehärtet sein, wobei auch hier zum Herstellungsverfahren Drahterodieren oder Lasern zum Einsatz kommen kann. Das Druckelement wird auch als Deckel bezeichnet und kann in relativ einfacher Ausgestaltung als eine Platte mit weicher Oberfläche, wie z.B. als eine aus rostfreiem Material hergestellte und gehärtete Stahlplatte mit daran angeordneter Hartgummischicht ausgeführt sein. Diese Gummischicht hat den Vorteil, dass trotz Ausübung einer relativ großen Druckkraft auf die Werkstücke diese nicht beschädigt werden. Zudem ist keine Beeinträchtigung der Funktion des Druckelementes bzw. der Hartgummischicht durch eine dielektrische Flüssigkeit, die für den Drahterosionsprozess benötigt wird, zu befürchten. Die vorzugsweise an der Stahlplatte stoffschlüssig zu befestigende Hartgummischicht ermöglicht es zudem, bestehende Größenunterschiede der Werkstücke in einem gewissen Maß auszugleichen. Zwecks Aufbringung der benötigten Druckkraft kann das Druckelement mittels Verschraubungen mit dem Gegendruckelement oder auch mit der Grundplatte verbunden sein, sodass durch Betätigung der Schraubverbindung das Druckelement in Richtung auf das Gegendruckelement bewegt wird und derart dazwischen befindliche Werkstücke geklemmt werden. Eine erreichbare Parallelität des Druckelementes zum Gegendruckelement im geschlossenen bzw. fixierenden Zustand der Spanneinrichtung sollte eine Toleranz von ±0,01 mm nicht überschreiten. Die Dicke der Hartgummischicht am Druckelement sollte dabei auf die Form und den Durchmesser der zu fixierenden Werkstücke abgestimmt sein, um mit ausreichender Sicherheit die benötigten Druckkräfte aufzubringen, ggf. maßliche Abweichungen der Werkstücke untereinander ausgleichen zu können und dabei gleichzeitig Beschädigungen der Werkstücke zu vermeiden.

In weiterer vorteilhafter Ausgestaltung ist zwischen den Aufnahmeeinrichtungen und den Formelementen der Stützeinrichtung ein Handhabungsbereich ausgebildet, der sich parallel zu der von dem Druckelement aufbringbaren Druckkraft tiefer erstreckt als die Position der Aufnahmeeinrichtungen. Die Positionen der Aufnahmeeinrichtungen sollen dabei definiert sein durch die Positionen der linienförmigen Auflagen der Werkstücke in den Aufnahmeeinrichtungen in einer Richtung entlang bzw. parallel zur Wirkungslinie der vom Druckelement bewirkten Druckkraft. Vorzugsweise ist die Position der den Handhabungsbereich einseitig begrenzenden Oberfläche tiefer als der tiefste Punkt bzw. die tiefste linienförmige Erstreckung der Aufnahmeeinrichtungen, wobei hier die Tiefe parallel zur Wirkungslinie der vom Druckelement aufbringbaren Druckkraft zu verstehen ist.

Es wird dabei davon ausgegangen, dass die Druckkraft vom Druckelement in Richtung auf das Gegendruckelement aufgebracht wird, wobei sich die Wirkungslinie dieser Druckkraft im Wesentlichen senkrecht von dem flächenartigen Druckelement auf das flächenartige Gegendruckelement erstreckt. Etwaige, durch die Anordnung der Gummischicht radial auf Werkstückschäfte wirkende Kräfte sollen dabei zur Beschreibung der Erfindung außer Betracht bleiben.

Eine den Handhabungsbereich begrenzende Oberfläche ist somit hinter den Aufnahmeeinrichtungen bzw. tiefer als diese angeordnet, sodass bei in der Fixierungsvorrichtung aufgenommenen Werkstücken zwischen den Werkstücken und dem Oberflächenbereich ein Abstand besteht. Diese Oberfläche kann z.B. schräg ausgeführt sein, sodass ein Einfädel-Prozess in die Formelemente und/oder die Aufnahmeelemente erleichtert wird. Generell dient der Handhabungsbereich zur Vereinfachung eines manuell oder automatisiert ausgeführten Greifens der Werkstücke, um diese aus der Aufnahmeeinrichtungen herausnehmen zu können, selbst wenn ein Werkstück ggf. durch die zuvor erfolgte Druckkraft-Beaufschlagung in der Aufnahmeeinrichtung festklemmen sollte.

Die Stützeinrichtung sowie auch die Spanneinrichtung sind vorzugsweise als Module ausgeführt und auf einer Grundplatte fixiert. Auch diese Grundplatte kann aus einem rostfreien Material hergestellt sein und gehärtet sein. Die Parallelität der Grundplatte in den Bereichen der Anschlüsse der Stützeinrichtung sowie der Spanneinrichtung beträgt vorzugsweise maximal ±0,01 mm. Ebenfalls sind Positionierungsbohrungen mit einer Toleranz von maximal ±0,005 mm auszuführen. Die Grundplatte ist vorzugsweise kompakt auszuführen, um der gesamten Fixiervorrichtung ein geringes Gewicht zu verleihen und demzufolge die Fixiervorrichtung leichter manuell bzw. automatisiert handhabbar zu gestalten.

Die erfindungsgemäße Vorrichtung kann auch als Spannlehre bezeichnet werden, mit der eine Vielzahl von gleichartigen Werkstücken zum Zeitpunkt eines Drahterodier- oder Laserprozesses und für eine anschließende Vermessung gehaltert werden können. Die Werkstücke lassen sich mithilfe der erfindungsgemäßen Fixiervorrichtung vorzugsweise mit einer Toleranz von maximal ±0,002 mm parallel zueinander beabstanden. Dadurch lassen sich die Werkstücke in dem gesamten Drahterodier- oder Laserprozess stabil fixieren. Ein modularer Aufbau der Fixiervorrichtung ermöglicht in einfacher und flexibler Weise den Austausch einzelner Einrichtungen, wie z.B. der Stützeinrichtung bzw. der Spanneinrichtung, um die gesamte Fixiervorrichtung unterschiedlichen Werkstücken bzw. unterschiedlichen Werkstück-Abmaßen anzupassen.

Ein weiterer erfindungsgemäßer Aspekt ist eine Drahterodiermaschine oder Laseranlage, die eine erfindungsgemäße Fixiervorrichtung aufweist. Dabei kann die Fixiervorrichtung ein integraler Bestandteil der Drahterodiermaschine bzw. der Laseranlage sein oder auch eine an eine Bearbeitungseinheit der Drahterodiermaschine bzw. Laseranlage angepasste Zusatzeinheit. Die Fixiervorrichtung ist dabei derart angeordnet und die Maschine ist derart ausgestaltet, dass sie mit einer Vorschubeinheit die in der Fixiervorrichtung fixierten Werkstücke mit der ausreichenden Positionsgenauigkeit einem Bearbeitungsbereich der Maschine zuführen kann.

Die Erfindung wird ergänzt durch ein Verfahren zum Drahterodieren oder Lasern einer Mehrzahl von Werkstücken, insbesondere von Pinzetten oder Scheren, bei dem mehrere Werkstücke bereitgestellt werden, eine erfindungsgemäße Fixiervorrichtung bereitgestellt wird, die Werkstücke in der Fixiervorrichtung zumindest kraftschlüssig fixiert werden und dann die Werkstücke einzeln nacheinander drahterodiert bzw. gelasert werden oder, alternativ, mehrere Werkstücke gleichzeitig drahterodiert bzw. gelasert werden. Die Anzahl der jeweils drahterodierten bzw. gelaserten Werkstücke ist davon abhängig, wie der Draht in Bezug zu Fixiervorrichtung geführt wird, nämlich gleichzeitig durch mehrere Werkstücke oder jeweils nur durch ein Werkstück. Vorzugsweise sollte beim Drahterodieren die Bearbeitung der Werkstücke mittels Feindraht, das heißt mit einem Drahtdurchmesser von 0,02 mm bis 0,07 mm erfolgen. Es lassen sich dabei diverse Konturen wie z.B. Schlitze, Verzahnungen usw. erzeugen, wobei die maßliche Toleranz der erzeugen Erodierkontur ±0,02 mm nicht überschreiten sollte.

Ein weiterer Verfahrensaspekt betrifft eine nach dem Drahterodieren bzw. Lasern erfolgende Messung der Werkstücke bzw. der hergestellten Werkstückkonturen oder -maße, wenn die Werkstücke weiterhin in der Fixiervorrichtung aufgenommen und arretiert sind. Dadurch lässt sich in einfacher Weise eine schnelle Qualitätskontrolle mehrerer Werkstücke realisieren.

Die vorliegende Erfindung wird im Folgenden anhand der in beiliegenden Zeichnungen dargestellten Ausführungsbeispiele erläutert.

Es zeigen
Fig.1: eine erfindungsgemäße Fixiervorrichtung einer ersten Ausführungsform in Ansicht von der Seite,
Fig.2: Die Fixiervorrichtung der ersten Ausführungsform in Ansicht von oben,
Fig.3: den in Fig. 2 angedeuteten Ausschnitt in vergrößerter Ansicht,
Fig.4: eine Fixiervorrichtung einer zweiten Ausführungsform in Ansicht von der Seite,
Fig.5: die Fixiervorrichtung der zweiten Ausführungsform in Ansicht von oben,
Fig.6: das in Fig.5 angedeutete Detail in vergrößerter Ansicht,
Fig.7: eine Stützeinrichtung in einer ersten Ausführungsform in Ansicht von oben,
Fig. 8: das in Figur 7 dargestellte Detail in vergrößerter Ansicht,
Fig.9: eine Stützeinrichtung einer zweiten Ausführungsform in Ansicht von oben,
Fig.10: das in Figur 9 angedeutete Detail in vergrößerter Ansicht,
Fig.11: eine Stützeinrichtung einer dritten Ausführungsform in Ansicht von oben,
Fig. 12: das in Figur 11 angedeutete Detail in vergrößerter Ansicht,
Fig.13: eine Stützeinrichtung einer vierten Ausführungsform in Ansicht von oben,
Fig.14: das in Figur 13 angedeutete Detail in vergrößerter Ansicht,
Fig.15: eine Stützeinrichtung einer fünften Ausführungsform in Ansicht von oben,
Fig.16: das in Figur 15 angedeutete Detail in vergrößerter Ansicht,
Fig.17: eine Grundplatte in Draufsicht, mit daran angeordnetem Gegendruckelement,
Fig.18: ein Gegendruckelement in Draufsicht,
Fig.19: das in Fig. 18 dargestellte Gegendruckelement in Ansicht von der Seite,
Fig.20: das in Fig.19 angedeutete Detail in vergrößerter Ansicht mit einzelnen Ausführungsformen der ausgebildeten Aufnahmeeinrichtungen.

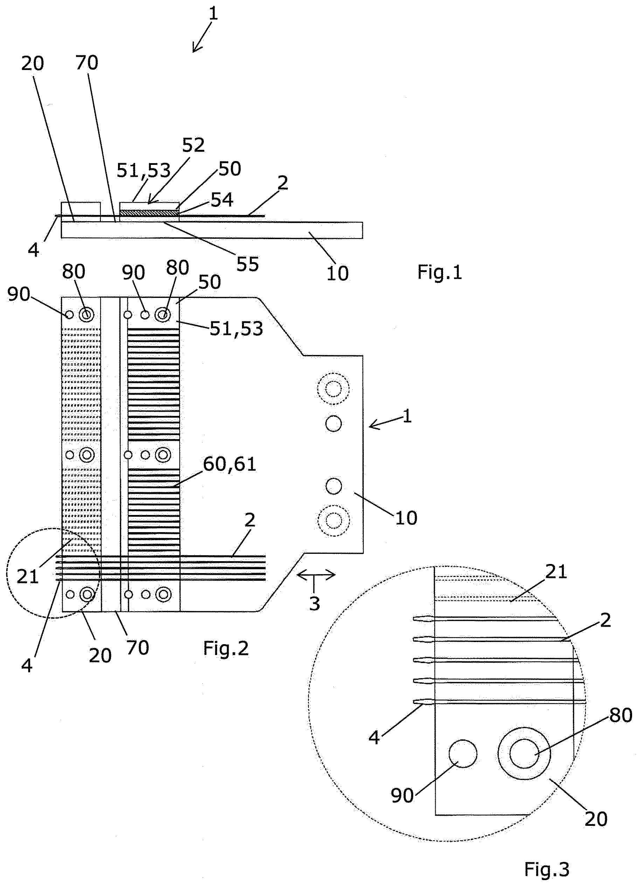

Zur Erläuterung der Fixiervorrichtung der ersten Ausführungsform wird Bezug genommen auf die Figuren 1-3. Die hier dargestellte Fixiervorrichtung 1 umfasst eine Grundplatte 10, auf der eine Stützeinrichtung 20 sowie eine Spanneinrichtung 50 zur Stützung bzw. Spannung und dadurch erfolgender Fixierung von mehreren Werkstücken 2 angeordnet sind. Diese Werkstücke 2 sind als längliche Elemente ausgebildet und dargestellt, deren Längserstreckungsrichtungen 3 im Wesentlichen senkreicht zu den Längserstreckungsrichtungen der Stützeinrichtung 20 sowie der Spanneinrichtung 50 verlaufen. Zur Befestigung der Fixiervorrichtung 1 kann diese eine Halterung umfassen, mit der die Fixervorrichtung an einer Drahterodiermaschine oder an einer Laseranlage gehaltert sein kann.

Es ist ersichtlich, dass die Werkstücke 2 im in der Fixiervorrichtung 1 aufgenommenen Zustand mit endseitigen Abschnitten 4 aus der Stützeinrichtung 20 herausragen. Dies ist insbesondere in Fig.3 erkennbar, in der das in Fig. 2 angedeutete Detail vergrößert dargestellt ist. Die Stützeinrichtung 20 sowie auch die Spanneinrichtung 50 sind über Verschraubungen mit der Grundplatte 10 verbunden, wobei hier die Schraubverbindungsbohrungen 80 erkennbar sind sowie daneben angeordnete Stiftbohrungen 90, die zur Einbringung von Stiften zwecks exakter Positionierung der Stützeinrichtung 20 und der Spanneinrichtung 50 relativ zueinander dienen.

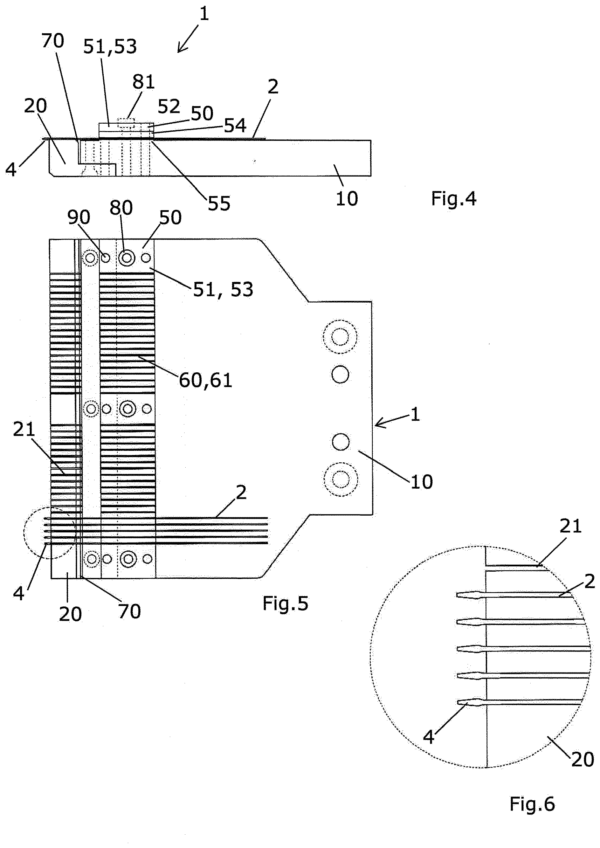

Eine Fixiervorrichtung 1 in einer zweiten Ausführungsform ist den Figuren 4-6 entnehmbar. Auch hier ist eine Grundplatte 10 vorhanden, die an einer (hier nicht dargestellten) Halterung angeschlossen sein kann. Im Wesentlichen in der Ebene der Grundplatte 10 erstreckt sich eine Stützeinrichtung 20. Diese Stützeinrichtung 20 ist mittels Schraubverbindungen mit der Grundplatte 10 verbunden. Die Grundplatte 10 bildet gleichzeitig ein Gegendruckelement 55 einer Spanneinrichtung 50 aus.

Genauso wie in der in den Figuren 1-3 dargestellten ersten Ausführungsform der erfindungsgemäßen Fixiervorrichtung 1 sind auch in dieser zweiten, in den Figuren 4-6 dargestellten Ausführungsform der Fixiervorrichtung 1 Formelemente 21 der Stützeinrichtung 20 fluchtend zur jeweiligen Aufnahmeeinrichtungen 60 in dem Gegendruckelement 55 der Spanneinrichtung 50 angeordnet und ausgerichtet, wobei diese Ausführungsform nicht Gegenstand der unter Schutz gestellten Erfindung ist.

Die Werkstücke 2 sind dabei durch die länglichen Formelemente 21 der Stützeinrichtung 20 positioniert und verlaufen in als zweite rinnenförmige Elemente 61 ausgebildeten Aufnahmeeinrichtungen 60 der Spanneinrichtung 50 bzw. in deren Gegendruckelement 55. Wie aus den Figuren 1 und 4 ersichtlich ist, weist eine jeweilige Spanneinrichtung 50 ein auch als Deckel bezeichnetes Druckelement 51 auf, welches mit einer in Fig. 4 dargestellten Schraube 81, von der selbstverständlich mehrere vorhanden sein können, in Richtung auf das darunter befindliche Gegendruckelement 55 gedrückt werden kann. Dazwischen angeordnete Werkstücke 2 können dadurch mit der dargestellten Druckkraft 52 beaufschlagt werden. Diese Druckkraft bewirkt derartige Reibkräfte zwischen dem Druckelement 51 und den Werkstücken 2 bzw. dem Gegendruckelement 55 und den Werkstücken 2, dass diese in ihrer Position in allen Freiheitsgraden fixiert sind. Das auch als Deckel bezeichnete Druckelement 51 kann dabei eine Stahlplatte 53 aufweisen, an deren Unterseite eine Hartgummischicht 54 angeordnet ist, die wiederum in Kontakt mit den zu fixierenden Werkstücken 2 kommt.

Insbesondere aus Figur 1 ist dabei noch ein Handhabungsbereich 70 ersichtlich, der durch einen freien Raum ausgebildet ist, der zum einen durch die Grundplatte 10 und dieser gegenüber durch die Werkstücke 2 und seitlich durch die Stützeinrichtung 20 sowie das Gegendruckelement 55 begrenzt ist.

Dieser Handhabungsbereich 70 erstreckt sich somit entlang einer Richtung, die parallel zur Wirkungslinie der Druckkraft 52 von dem Druckelement 51 gesehen hinter den Werkstücken 2 führt. Dieser Handhabungsbereich 70 ermöglicht in einfacher Weise ein Hinter- bzw. Untergreifen der Werkstücke 2 und somit ein erleichtertes Herausnehmen der Werkstücke 2 aus der Spanneinrichtung, wenn diese geöffnet ist.

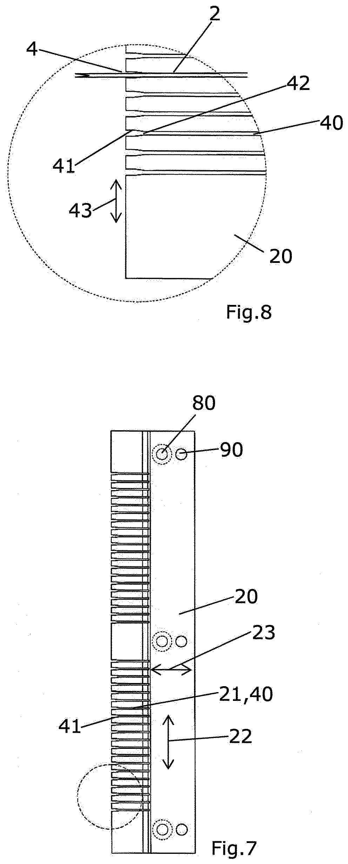

In den Figuren 7 bis 16 sind Stützeinrichtungen 20 unterschiedlicher Ausführungsformen dargestellt.

Aus den Figuren 7 und 8 ist eine Stützeinrichtung 20 ersichtlich, die als Werkstücke 2 aufnehmende Formelemente 21 erste rinnenförmige Elemente 40 aufweist, die parallel zueinander angeordnet sind. In diesen ersten rillenförmigen Elementen 40 können die Werkstücke 2 eingelegt werden. Dadurch sind die Werkstücke in ihren translatorischen Freiheitsgraden 22, die senkreicht zu den Längserstreckungsrichtungen 3 der Werkstücke 2 bzw. auch zu den Längserstreckungsrichtungen 23 der Formelemente ausgerichtet ist, blockiert. An die ersten rinnenförmigen Elemente 40 schließen sich in deren Längserstreckungsrichtungen Aufweitungsbereiche 41 an, die senkrecht zur Längserstreckungsrichtung des Formelementes 23 eine größere Weite haben als die ersten rinnenförmigen Elemente 40. Dadurch wird gewährleistet, dass die endseitigen Abschnitte 4 der Werkstücke 2 bis an den tiefsten Punkt 42 eines jeweiligen Aufweitungsbereiches 41 gezogen werden können und derart in der Längserstreckungsrichtung des Formelementes 23 fixiert werden können. Durch eine Anpassung der Weite des Aufweitungsbereiches 41 an die Weite des jeweiligen endseitigen Abschnittes 4 ist dieser endseitige Abschnitt 4 auch in einem translatorischen Freiheitsgrad 43, der ebenfalls senkreicht zur Längserstreckungsrichtung des Werkstücks 3 bzw. auch senkrecht zur Längserstreckungsrichtung des Formelementes 23 verläuft, blockiert.

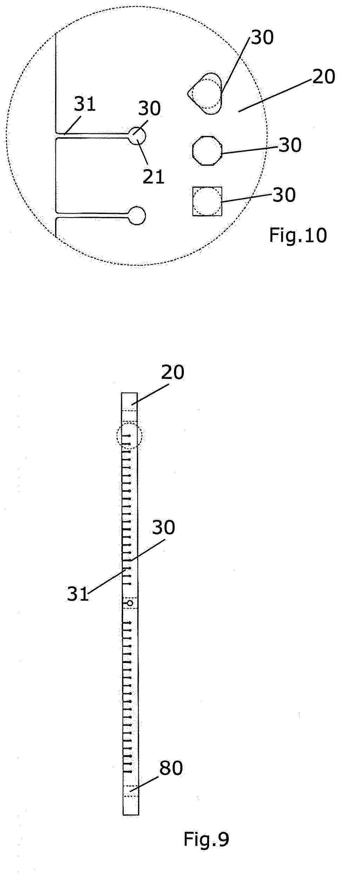

In den Figuren 9 und 10 ist eine Stützeinrichtung 20 einer zweiten Ausführungsform dargestellt, wobei ersichtlich ist, dass die Formelemente 21 hier nicht durch Rinnen ausgebildet sind, sondern als Durchgangsöffnungen 30. An eine solche Durchgangsöffnung 30 schließt sich jeweils radial ein Schlitz 31 an, der jedoch lediglich fertigungsbedingt beim Drahterodieren der Durchgangsöffnung 30 erzeugt wird.

In Figur 10 sind einzelne Alternativen der Form des Querschnittes der Durchgangsöffnungen 30 dargestellt, wobei ersichtlich ist, dass eine solche Durchgangsöffnung 30 nicht auf einen runden Querschnitt festgelegt ist, sondern stattdessen auch einen rechteckigen, einen polygonalen oder auch einen annähernd dreieckigen Querschnitt, ggf. mit abgerundeten Ecken, aufweisen kann. Diese alternativen Formen der Durchgangsöffnungen 30 sind dabei lediglich zur Verdeutlichung ihrer möglichen Formen dargestellt und nicht in den hier dargestellten Positionen vorgesehen.

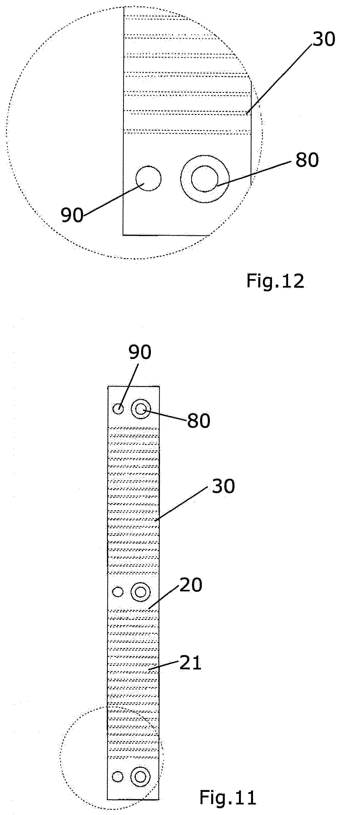

In den Figuren 11 und 12 ist eine dritte Ausführungsform der Stützeinrichtung 20 ersichtlich, wobei die hier dargestellte Stützeinrichtung 20 ebenfalls als Durchgangsöffnungen 30 ausgeführte Formelemente 21 aufweist.

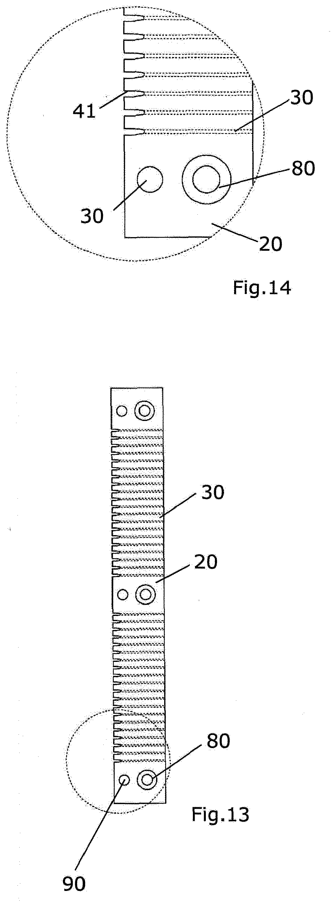

Eine vierte Ausführungsform der Stützeinrichtung 20 ist in den Figuren 13 und 14 dargestellt, die sich von der in den Figuren 11 und 12 dargestellten Stützeinrichtung lediglich darin unterscheidet, dass sich an die Durchgangsöffnungen 30 Aufweitungsbereiche 41 anschließen, die den bereits beschriebenen Effekt der Fixierung von endseitigen Abschnitten 4 der Werkstücke 2 bewirken.

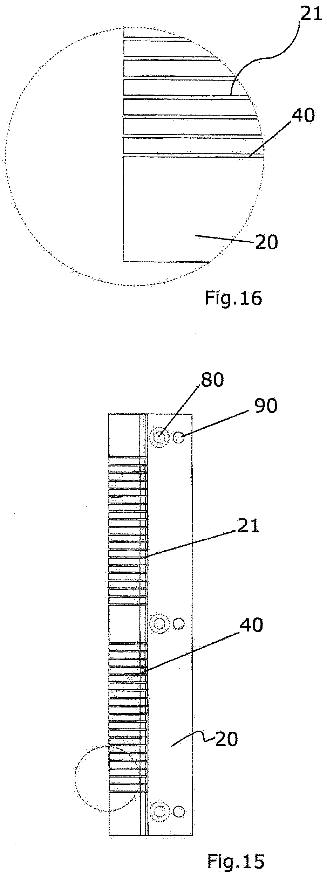

Eine nicht erfindungsgemäße Stützeinrichtung 20 ist in den Figuren 15 und 16 dargestellt, wobei hier die Formelemente 21 der Stützeinrichtung 20 wiederum durch erste rinnenförmige Elemente 40 ausgebildet sind, die nicht vom Schutz der vorliegenden Erfindung umfasst sind.

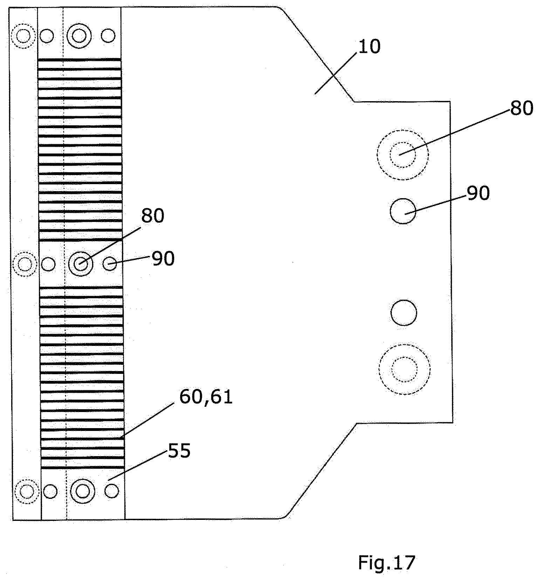

Fig.17 zeigt eine Grundplatte 10 mit daran angeordneter Spanneinrichtung 50, von der lediglich das Gegendruckelement 55 dargestellt ist. Deutlich sind dabei die Aufnahmeeinrichtungen 60 in Form der zweiten rinnenförmigen Elemente 61 erkennbar, die zueinander parallel angeordnet sind. Das Gegendruckelement 55 ist ebenfalls mittels Schraubverbindungen sowie Stiften mit der Grundplatte 10 verbunden, wobei hier lediglich die Schraubverbindungsbohrungen 80 sowie die Stiftbohrungen 90 erkennbar sind.

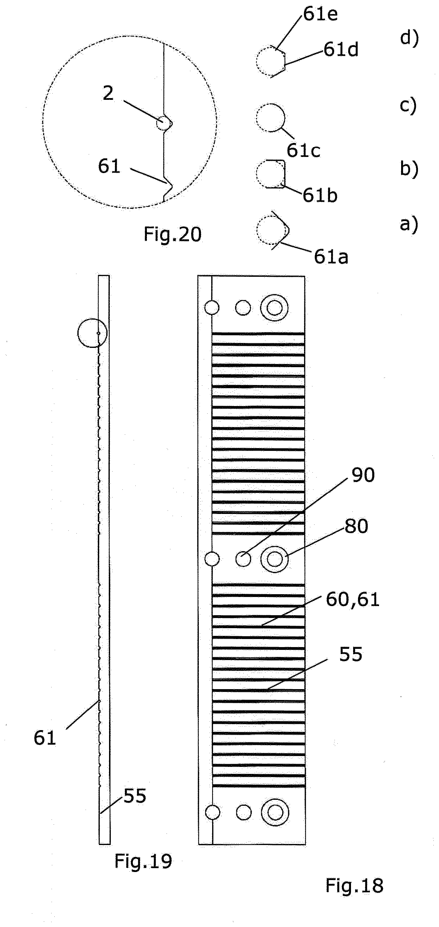

Eine detaillierte Darstellung eines Gegendruckelementes 55 zeigen die Figuren 18 bis 20. Es ist erkennbar, dass ein jeweiliges zweites rinnenförmiges Element 61 an der Oberfläche der Gegendruckplatte 55 ausgebildet ist. Ein solches zweites rinnenförmiges Element 61 kann als V-Profil 61a, wie es auch in Figur 20 dargestellt ist, ausgebildet sein, oder aber auch als ein U-Profil 61b, als ein Halbkreisprofil 61c oder auch als eine Profil mit einer Grundkante 61d, an der der sich stumpfwinklig Flankenkanten 61e anschließen.

**Bezugszeichenliste**

| | |
|---|---|
| Fixiervorrichtung | 1 |
| Werkstück | 2 |
| Längserstreckungsrichtung | 3 |
| endseitiger Abschnitt | 4 |
| Grundplatte | 10 |
| Stützeinrichtung | 20 |
| Formelement | 21 |
| translatorischer Freiheitsgrad | 22 |
| Längserstreckungsrichtung des Formelementes | 23 |
| Durchgangsöffnung | 30 |
| Schlitz | 31 |
| erstes rinnenförmiges Element | 40 |
| Aufweitungsbereich | 41 |
| tiefster Punkt | 42 |
| fixierter translatorischer Freiheitsgrad | 43 |
| Spanneinrichtung | 50 |
| Druckelement | 51 |
| Druckkraft | 52 |
| Stahlplatte | 53 |
| Hartgummischicht | 54 |
| Gegendruckelement | 55 |
| Aufnahmeeinrichtung | 60 |
| zweites rinnenförmiges Element | 61 |
| V-Profil | 61a |
| U-Profil | 61b |
| Halbkreisprofil | 61c |
| Grundkante | 61d |
| Flankenkante | 61e |
| Handhabungsbereich | 70 |
| Schraubverbindungsbohrung | 80 |
| Stiftbohrung | 90 |
| Grundkante | 61d |
| Flankenkante | 61e |
| Handhabungsbereich | 70 |
| Schraubverbindungsbohrung | 80 |
| Stiftbohrung | 90 |

## Patentansprüche

1. Fixiervorrichtung (1) zur Fixierung von Werkstücken( 2), insbesondere zur Fixierung von im Wesentlichen stangenförmigen und mittels Drahterodieren oder Lasern zu behandelnden Werkstücken (2), umfassend eine Stützeinrichtung (20) mit mehreren Formelementen (21) zur Aufnahme und Stützung mehrerer Werkstücke (2) in den entsprechend ausgebildeten Formelementen (21) und zur Positionierung und Fixierung der Werkstücke (2) in zumindest einem translatorischen Freiheitsgrad (22) in den Formelementen(21), wobei
die Fixiervorrichtung (1) eine Spanneinrichtung (50), mit der mehrere in den Formelementen (21) aufgenommenen Werkstücke (2) jeweils mit einer Druckkraft (52) beaufschlagbar sind, aufweist, so dass die Werkstücke (2) auf Grund der Druckkraft-Beaufschlagung zumindest kraftschlüssig in der Spanneinrichtung (50) fixiert sind, wobei vorgesehen ist,
dass die Stützeinrichtung (20) als Formelemente (21) mehrere Durchgangsöffnungen (30) umfasst, durch die die Werkstücke (2) hindurch führbar sind;
**dadurch gekennzeichnet,**
**dass** die Spanneinrichtung (50) ein Druckelement (51) und ein Gegendruckelement (55) aufweist, zwischen denen die Werkstücke (2) einklemmbar sind, und dass wenigstens eines der Elemente Druckelement (51) und Gegendruckelement (55) mehrere im Wesentlichen parallel zueinander verlaufende Aufnahmeeinrichtungen (60) aufweist, die der Abstützung der Werkstücke (2) sowie deren Fixierung in im Wesentlichen paralleler Ausrichtung dienen.

2. Fixiervorrichtung nach Anspruch 1, dass die Stützeinrichtung (20) an die Formelemente (21) entlang deren Längserstreckungsrichtung (23) sich anschließend jeweils Aufweitungsbereiche (41) aufweist, wobei der jeweilige Aufweitungsbereich (41) derart ausgestaltet ist, dass in ihm ein endseitiger Abschnitt (4) eines in oder an dem Formelement (21) geführten Werkstückes (2) in einem translatorischen Freiheitsgrad (43) senkrecht zur Längserstreckungsrichtung (23) des Formelementes (21) fixierbar ist.

3. Fixiervorrichtung nach Anspruch 1, dass die Aufnahmeeinrichtungen (60) durch zweite rinnenförmige Elemente (61) ausgebildet sind, die ein V-Profil (61a), ein U-Profil (61b), ein Halbkreisprofil (61c) oder ein Profil mit Grundkante (61d) und daran jeweils stumpfwinklig angeschlossenen Flankenkanten (61e) aufweisen.

4. Fixiervorrichtung nach einem der Ansprüche 2 und 3, dass zwischen den Aufnahmeeinrichtungen (60) und den Formelementen (21) der Stützeinrichtung (20) ein Handhabungsbereich (70) ausgebildet ist, der sich in entlang der von dem Druckelement (51) aufbringbaren Druckkraft (52) tiefer erstreckt als die Position der Aufnahmeeinrichtungen (60).

5. Drahterodiermaschine oder Laseranlage, umfassend eine Fixiervorrichtung (1) gemäß einem der Ansprüche 1 bis 4.

6. Verfahren zum Drahterodieren oder Lasern einer Mehrzahl von Werkstücken (2), insbesondere von Pinzetten oder Scheren, bei dem mehrere der Werkstücke (2) bereitgestellt werden, eine Fixiervorrichtung (1) gemäß einem der Ansprüche 1 bis 4 bereitgestellt wird, die Werkstücke (2) in der Fixiervorrichtung (1) zumindest kraftschlüssig fixiert werden und dann die Werkstücke (2) einzeln nacheinander drahterodiert oder mittels Laser bearbeitet werden oder mehrere Werkstücke (2) gleichzeitig drahterodiert oder mittels Laser bearbeitet werden.

## Claims

1. A fixing device (1) for fixing workpieces (2), in particular for fixing substantially rodshaped workpieces (2) that are to be treated by means of wire eroding or lasering, comprising a support apparatus (20) with a plurality of form elements (21) for retaining and supporting several workpieces (2) in the correspondingly formed form elements (21) and for positioning and fixing the workpieces (2) in at least one translational degree of freedom (22) in the form elements (21), wherein
the fixation device (1) has a tensioning apparatus (50), with which several of the workpieces (2) retained in the form elements (21) can each have a compressive force (52) applied to them, so that the workpieces (2) are fixed in the tensioning apparatus (50) at least in a force-fitting manner due to the application of compressive force, wherein it is provided
that the support device (20) comprises several through-openings (30) as form elements (21), through which the workpieces (2) are guidable;
**characterized in that**,
the tensioning apparatus (50) has a pressure element (51) and a counter-pressure element (55), between which the workpieces (2) are clampable, and that at least element one of the pressure element (51) and counter-pressure element (55) has several retention apparatuses (60) running substantially in parallel to each other, which serve to support the workpieces (2) and their fixing in a substantially parallel direction.

2. The fixing device according to Claim 1, comprising the support apparatus (20) with its form elements (21) each having extension areas (41) attached to them along their longitudinal direction (23), wherein each extension area (41) is configured so that an end section (4) of a workpiece (2) guided into or at the form element (21) in one translational degree of freedom (43) is fixable therein perpendicular to the longitudinal direction (23) of the form element (21).

3. The fixing device according to Claim 1, comprising the retention devices (60) being formed from two groove-shaped elements (61), that have a V-profile (61a), a U-profile (61b), a semicircular profile (61c) or a base edge profile (61d) with these each having side edges (61e) attached at an obtuse angle.

4. The fixing device according to any one of Claims 2 or 3, comprising a handling area (70) formed between the retention apparatuses (60) and the form elements (21) of the support apparatus (20), which extends deeper than the position of the retention apparatuses (60) along the compressive force (52) that can be brought to bear by the pressure element (51).

5. A wire eroding machine or laser assembly, having the fixing device (1) according to any one of Claims 1 to 4.

6. A method for wire eroding or lasering multiple workpieces (2), in particular tweezers or scissors, in which a plurality of the workpieces (2) are provided, the fixing device (1) according to any one of Claims 1 to 4 is provided, the workpieces (2) are fixed in the fixing device (1) at least in a force-fitting manner and then the workpieces (2) are individually one after another wire cut or processed with lasers, or several workpieces (2) are simultaneously wire cut or processed with lasers.

## Revendications

1. Dispositif de fixation (1) pour fixer des pièces à usiner (2), notamment pour fixer des pièces à usiner (2) essentiellement en forme de barres et à traiter par électroérosion à l'aide d'un fil ou par laser, comprenant un moyen de support (20) avec plusieurs éléments de forme (21) pour recevoir et supporter plusieurs pièces à usiner (2) dans les éléments de forme réalisés en conséquence (21) ainsi que pour positionner et fixer les pièces à usiner (2) dans au moins un degré de liberté en translation (22) à l'intérieur des éléments de forme (21), dans lequel
le dispositif de fixation (1) présente un moyen de bridage (50), lequel permet de soumettre plusieurs pièces à usiner (2) logées dans les éléments de forme (21) respectivement à une force de compression (52), de sorte que les pièces à usiner (2) sont fixées dans le moyen de bridage (50) au moins par adhérence du fait de l'application d'une force de compression, dans lequel il est prévu que le moyen de support (20) comprend comme éléments de forme (21) plusieurs ouvertures de passage (30), à travers lesquelles les pièces à usiner (2) peuvent être guidées ;
**caractérisé en ce**
**que** le moyen de bridage (50) présente un élément de pression (51) et un élément de contre-pression (55), entre lesquels les pièces à usiner (2) peuvent être pincées, et qu'au moins l'un des éléments, à savoir élément de pression (51) et élément de contre-pression (55), comporte plusieurs moyens de réception (60) essentiellement parallèles les uns aux autres, qui servent à supporter les pièces à usiner (2) ainsi qu'à les fixer dans une direction essentiellement parallèle.

2. Dispositif de fixation selon la revendication 1, **caractérisé en ce que** le moyen de support (20) présente au niveau des éléments de forme (21) en direction de leur extension longitudinale (23) respectivement des zone d'élargissement (41) s'y rattachant, dans lequel la zone d'élargissement respectif (41) est conçu de manière à ce qu'une partie terminale (4) d'une pièce à usiner (2) guidée dans ou contre l'élément de forme (21) peut y être fixée perpendiculairement au sens de l'extension longitudinale (23) de l'élément de forme (21) dans un degré de liberté en translation (43).

3. Dispositif de fixation selon la revendication 1, **caractérisé en ce que** les moyens de réception (60) sont constitués de seconds éléments en forme de goulottes (61), qui présentent un profil en V (61a), un profil en U (61b), un profil semi-circulaire (61c) ou un profil avec une arête de base (61d) et des arêtes latérales (61e) s'y rattachant respectivement à angle obtus.

4. Dispositif de fixation selon l'une quelconque des revendications 2 et 3, **caractérisé en ce qu'**une zone de manipulation (70) est constituée entre les moyens de réception (60) et les éléments de forme (21) du moyen de support (20), qui s'étend plus profondément que la position des moyens de réception (60) dans le sens longitudinal de la force de compression (52) applicable par l'élément de pression (51).

5. Machine d'usinage par électroérosion à fil ou installation laser, comprenant un dispositif de fixation (1) selon l'une quelconque des revendications 1 à 4.

6. Procédé d'électroérosion par fil ou de traitement par laser de multiples pièces à usiner (2), notamment de pincettes ou de ciseaux, dans lequel plusieurs des pièces à usiner (2) sont fournies, un dispositif de fixation (1) selon l'une quelconque des revendications 1 à 4 est fourni, les pièces à usiner (2) sont fixées au moins par adhérence dans le dispositif de fixation (1) et les pièces à usiner (2) sont ensuite soumises séparément l'une après l'autre à une électroérosion à l'aide d'un fil ou traitées par laser ou bien plusieurs pièces à usiner (2) sont soumises simultanément à une électroérosion à l'aide d'un fil ou traitées par laser.
